# EUROPEAN PATENT SPECIFICATION

(11) **EP 3 326 289 B1**
(45) Date of publication and mention of the grant of the patent: **03.07.2019**
(21) Application number: 16766080.2
(22) Date of filing: 22.07.2016
(51) Int. Cl.: H02S 50/10, H02S 50/00

(54) **METHOD FOR DETERMINING THE ABSOLUTE POINT OF MAXIMUM POWER DELIVERED BY A STRING OF PHOTOVOLTAIC PANELS AND DEVICE CONFIGURED TO CARRY OUT SAID METHOD**
VERFAHREN ZUR BESTIMMUNG DES ABSOLUTEN PUNKTS DER MAXIMALEN BEREITGESTELLTEN LEISTUNG VON EINEM STRING VON FOTOVOLTAIKPANELEN UND VORRICHTUNG ZUR DURCHFÜHRUNG DES VERFAHRENS
PROCÉDÉ DE DÉTERMINATION DU POINT ABSOLU DE PUISSANCE MAXIMUM FOURNIE PAR UNE CHAÎNE DE PANNEAUX PHOTOVOLTAÏQUES, ET DISPOSITIF CONFIGURÉ POUR METTRE EN OEUVRE LEDIT PROCÉDÉ

(30) Priority: 24.07.2015 IT UB20152461
(43) Date of publication of application: 30.05.2018
(73) Proprietor: Equipaggiamenti Elettronici Industriali S.p.A., 36100 Vicenza (IT)
(72) Inventor: BALBO, Narciso, 36051 Creazzo (vi) (IT)
(74) Representative: Marchioro, Paolo
(86) International application number: PCT/IB2016/054388
(87) International publication number: WO 2017/016726

(56) References cited:
- WO-A1-2013/111044
- WO-A1-2014/191928
- US-A1- 2010 263 711
- US-A1- 2012 248 880

## Description

The present invention concerns an improved method for determining the absolute point of maximum power delivered by a string of photovoltaic panels connected together in series, also known as the Maximum Power Point or by the acronym MPP. The document Us 2010/263711A discloses methods to monitor solar installations.

The invention also concerns a device for managing the aforementioned string of photovoltaic panels configured to carry out the steps of the aforementioned improved method for determining the absolute point of maximum power delivered.

It is known that photovoltaic cells and photovoltaic panels, each of which comprises a plurality of such cells, are used to generate electricity from solar radiation. Because of this capability, photovoltaic panels, amongst other things, are useful in situations in which it is not possible to exploit electrical energy generated from other sources, like for example to activate water pumping systems at isolated locations.

It is also known that such photovoltaic panels, due to their increasingly competitive costs, have become one of the most widely used renewable energy sources in the various technological applications.

However, the photovoltaic industry has not yet been able to solve some intrinsic technological problems of making and using photovoltaic panels for generating electrical energy, consequently limiting their average efficiency to a level that is not yet sufficient to allow photovoltaic technology to completely replace different sources for generating electrical energy, in turn now obsolete for different reasons.

Basically, the electrical energy generated by photovoltaic sources and provided to the community and private individuals is still too limited and expensive with respect to that obtained from other sources.

Such a drawback is due, in particular, to the fact that the efficiency of electrical energy production of such photovoltaic systems depends greatly on the climactic conditions, like temperature and solar radiations that hits the photovoltaic panels. In turn, the temperature and solar radiation vary as a function of latitude, of the orientation of the solar field, of the season, of the time of day and of the presence of atmospheric phenomena like clouds and perturbations.

In particular, the presence of clouds or perturbations, as well as the possible vicinity of the photovoltaic panels to a building or to a different natural or artificial obstacle can disadvantageously result in a reduction, through the day, of the solar radiation on the photosensitive surface of the same panels, consequently lowering the average efficiency thereof in producing electrical energy.

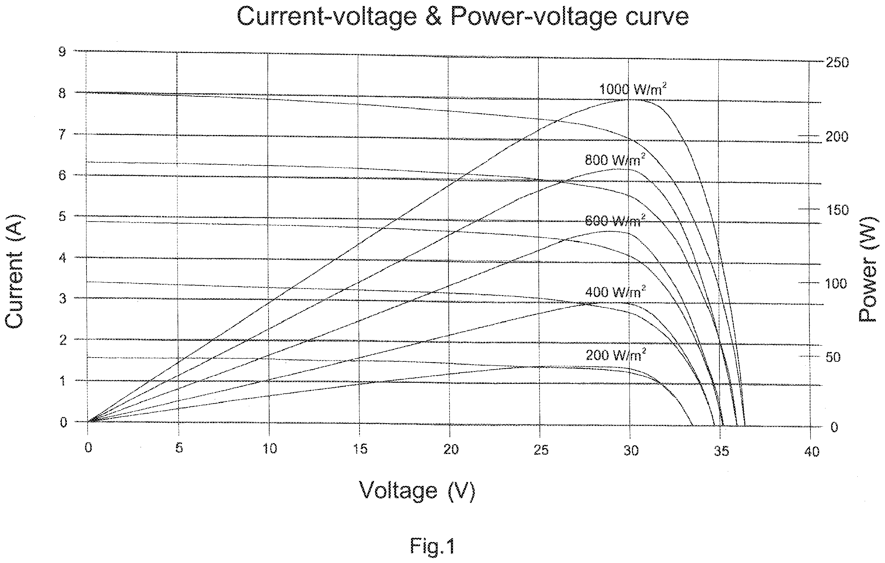

In strictly technical terms, considering the characteristic curve of the electrical magnitudes of voltage, current and power V-I-P of a photovoltaic panel, an example of which is represented in fig. 1, such a variation of solar radiation determines the movement of the point of maximum power that the panel itself is able to deliver.

These technical considerations have led to the need to identify, moment by moment, what electrical voltage value should be set for the photovoltaic panel at which the transfer of power towards the electrical energy distribution network is the maximum.

For this purpose, electronic devices, in particular the inverters currently connected downstream of each photovoltaic panel in order to manage the behaviour thereof, are configured to implement an algorithm for determining the point of maximum power delivery, known by the acronym MPPT ("Maximum Power Point Tracker"). It is clear that an electronic device capable of remaining "locked" at this point will always obtained the maximum power available in any condition.

In detail, there are different techniques for obtaining the MPPT function, which differ from one another in dynamic performance (adjustment time) and accuracy.

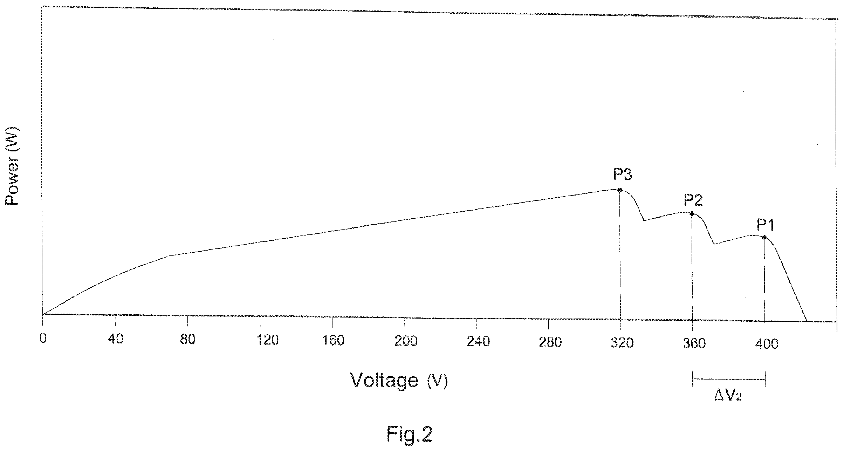

Among the various ways of implementing the MPPT algorithm, the most common one is certainly that defined as "Perturb and Observe", which foresees to observe, moment by moment, the power delivered by one or more photovoltaic panels connected in series by varying the voltage set for them. In particular, the algorithm foresees to continuously increase and decrease by a predetermined quantity the voltage set at the ends of the photovoltaic panel or of the photovoltaic panels with respect to the current value set, until a further delivered power value is reached that is greater than the current one. However, it is known that such a variation is carried out in small steps, i.e. with a very small voltage variation, so that the photovoltaic panel(s) continue to work within the current maximum power point, since it is presumed that this is the only maximum power point that can be identified, as represented in fig. 1. In other words, such an approach is optimal in the case of a single photovoltaic panel or a string of photovoltaic panels connected together in series where the various panels all operate in the same nominal conditions. However, in reality a string of photovoltaic panels often has at least one damaged panel or, as stated earlier, it is in a working condition of low solar radiation. In this case, the characteristic voltage-power V-P of such a string can have many local points of maximum power delivered, as represented in fig. 2. In this circumstance, the aforementioned MPPT algorithm of the prior art is partially inefficient, since it is not always able to identify and lock onto, among such local points, the absolute point of maximum power delivered. Indeed, as seen earlier, the MPPT algorithm of the prior art, once a first local maximum power point has been identified, acts exclusively around it, totally ignoring the possible other local maximum power points, even if the absolute maximum power point is among them.

The present invention intends to overcome all of the quoted drawbacks.

In particular, a first purpose of the invention is to define a method for determining the absolute point of maximum power delivered by a string of photovoltaic panels connected in series and making a device capable of implementing such a method.

Therefore, a purpose of the invention is to define a method and to make a relative management device capable of optimising, in every possible situation, the delivery of power of a string of photovoltaic panels connected in series and therefore of always keeping the efficiency thereof at the maximum possible level.

Advantageously, the fact of defining a method capable of determining the absolute maximum power point of a plurality of photovoltaic panels connected together in series makes it possible to reduce the number of management devices that it is necessary to install in a photovoltaic system in relation to the number of photovoltaic panels belonging to such a system.

Indeed, according to the prior art, as stated earlier, in order to check a possible difference in performance between photovoltaic panels belonging to the same string, it is commonly foreseen to provide each panel with a relative connected management device capable of tracking the point of maximum power delivered, in order to avoid the reduction in efficiency of the entire string caused by the malfunction or low efficiency of a single photovoltaic panel. Said purposes are accomplished with the definition of the method for determining the absolute point of maximum power delivered by a string of photovoltaic panels, in accordance with the main claim.

Further characteristics of the method of the invention are described in the dependent claims.

Also forming part of the invention is the management device configured to carry out the steps of the aforementioned method, in accordance with claim 7. The aforementioned purposes, together with the advantages that will be mentioned hereinafter, will be highlighted during the description of a preferred embodiment of the invention that is given, for indicating but not limiting purposes, with reference to the attached tables of drawings, where:
- fig. 1 represents the characteristic voltage-current-power V-I-P of a photovoltaic panel in various radiation conditions;
- fig. 2 represents the characteristic voltage-power V-P of a string of photovoltaic panels with many local points of maximum power delivered, wherein the power values of such local points are at least partially increasing in the increasing direction of the voltage set for the string;
- fig. 3 represents the flow diagram of the method of the invention;
- fig. 4 schematically represents a string of photovoltaic panels downstream of which the management device of the invention is connected.

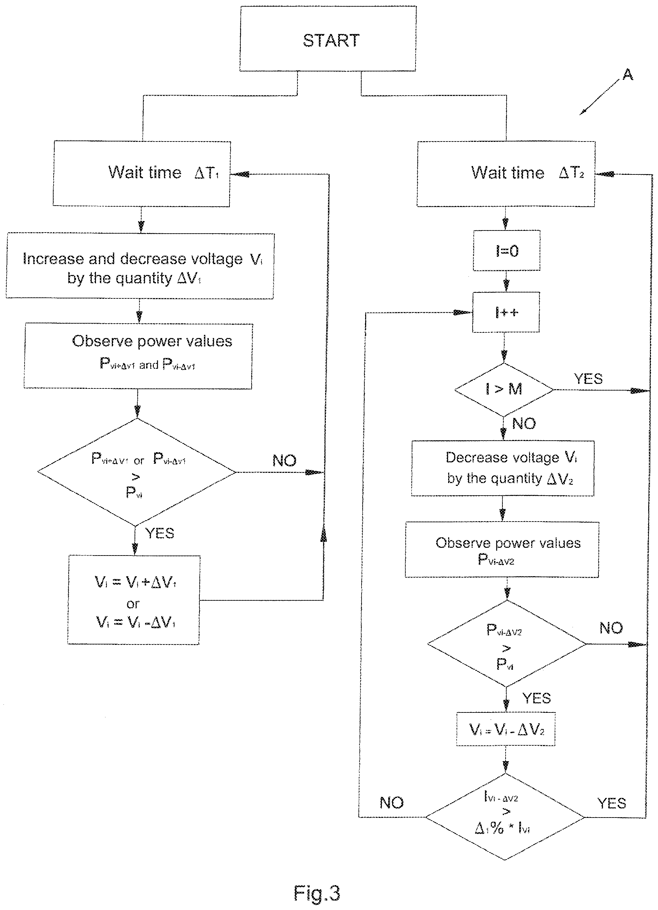

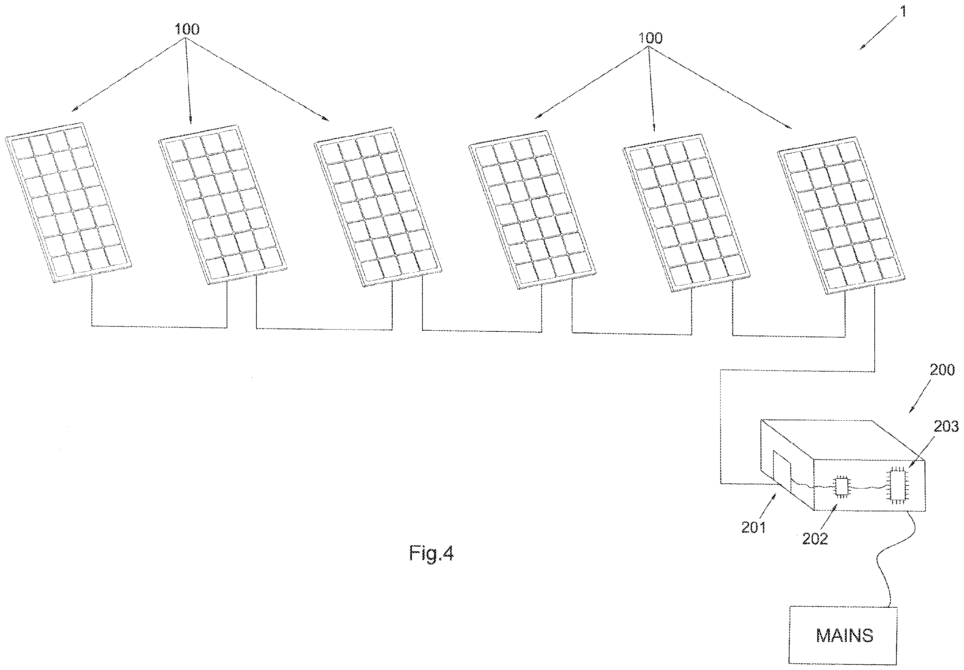

The method of the invention, the operative steps of which are represented in the flow diagram of fig. 3, makes it possible to determine the absolute point of maximum power delivered by a string **1** of photovoltaic panels **100** connected together in series, a schematic representation of which is presented in fig. 4.

In particular, as can be seen in fig. 3, such a method foresees to cyclically increase and reduce, for every time interval ΔT₁, of predetermined quantity, the voltage value Vᵢ set at the ends of the aforementioned string **1** by a predetermined voltage quantity ΔV₁. In other words, as stated earlier, such a variation step, in the jargon called "perturbation", makes it possible to observe the behaviour of the string **1** of photovoltaic panels **100** around the voltage value Vᵢ, corresponding to the point of maximum power delivery currently considered.

In even greater detail, the method foresees to observe, at the aforementioned two voltage values Vᵢ + ΔV₁ and Vᵢ - ΔV₁, the variations of the power P_{Vi + ΔV1} and P_{Vi - ΔV1} delivered by the string **1** with respect to the value of the power P_{Vi} delivered at the aforementioned set voltage value Vᵢ.

Following such an observation, in the case in which one of the power values P_{Vi + ΔV1} or P_{Vi - ΔV1} is greater than the aforementioned delivered power value P_{Vi}, the method foresees to set the new voltage value Vᵢ, defined at the ends of the string **1** of photovoltaic panels **100,** as the voltage value Vᵢ respectively increased or decreased by the so-called perturbation voltage quantity ΔV₁. Preferably, the voltage quantity ΔV₁ is selected in the range between 3 and 10 V, whereas the size of the time interval ΔT₁, between two consecutive observations is commonly selected between 80 and 150 ms, so as to be able to continuously verify the possible movement of the aforementioned point of maximum power delivery by the string **1.**

According to the invention, the present method, as well as foreseeing to carry out the steps just described and of the known type, also foresees to carry out, for every time interval ΔT₂, the sequence of operations described shortly and indicated in fig. 3 with **A.** In particular, according to the invention, for every time interval ΔT₂ the method foresees to carry out the aforementioned sequence of operations **A** at least once and repeat it a predetermined maximum number of times **M.** Preferably, such a sequence of operations **A,** for every time interval ΔT₂, can be repeated at most a number of times **M** equal to about 30% of the number of photovoltaic panels **100** belonging to the aforementioned string **1.** For example, in the case in which the string **1** comprises ten photovoltaic panels **100** connected together in series, the maximum number **M** of repetitions of such a sequence of operations **A** for every time interval ΔT₂, according to the preferred embodiment, is equal to three.

The logic at the basis of such a limitation consists of the fact that, as will be seen in detail shortly, the search for the absolute point of maximum power delivered, among the multiple local maximum power points, only makes sense so long as the number of malfunctioning or shaded photovoltaic panels **100** of a string **1** is limited. Indeed, in the opposite case, for which the number is high, it is no longer advantageous to search for the absolute maximum power point through processing, but it is more reasonable to solve the technical or structural problem at the origin of such malfunctions or low solar radiation. However, this does not rule out the possibility that for different embodiments of the method of the invention the maximum number **M** of repetitions of the aforementioned sequence of operations **A** for every interval ΔT₂ is selected based on a different percentage value with respect to the one expressed just now for the preferred embodiment, or it is not impossible for such a number **M** to be selected in an absolute manner, or furthermore, for further different embodiments, it is possible for such a limit not to be fixed.

Furthermore, the method of the invention foresees that the size of such a time interval ΔT₂ is greater with respect to the size of the time interval ΔT₁. Preferably such a time interval ΔT₂ is selected in the order of magnitude of minutes, preferably it is selected equal to about 1 minute. In other words, the method of the invention foresees to start such a procedure that, in turn, consists of carrying out one or more times the sequence of operations **A** every **n** times the known perturbation steps are carried out, wherein such a value **n** is clearly equal to ΔT₂/ΔT₁.

In terms, specifically, of the sequence of operations **A** to be carried out and possibly repeated for every time interval ΔT₂, according to the invention, it firstly foresees to decrease the voltage value Vᵢ set for the string **1** by a voltage quantity ΔV₂. In particular, according to the invention, the value selected for ΔV₂ is substantially equal to the open circuit nominal voltage value of each of the photovoltaic panels **100** belonging to the same string **1.** In other words, the value ΔV₂ is selected around the open circuit nominal voltage value of each of the photovoltaic panels **100,** wherein the term around is meant to indicate a percentage variation, either positive or negative, less than or equal to 10%, preferably less than or equal to 5%, of such a precise nominal voltage value indicated by the manufacturer for the single photovoltaic panel.

The logic forming the basis of the selection of such a specific value for ΔV₂ consists of the fact that, generically, in a string **1** of photovoltaic panels **100** connected in series and that have many local points of maximum power delivered, the voltage difference between each pair of adjacent local maximum delivery points substantially coincides, indeed, with the open circuit nominal voltage value of each of the aforementioned photovoltaic panels **100,** as can be seen in the example given in fig. 2.

Therefore, the reduction of the voltage value Vᵢ defined at the ends of the string **1** by voltage steps, each equal to such a quantity ΔV₂, makes it possible, for each step carried out, to bypass the photovoltaic panel **100** that has lowest efficiency, thus allowing the string **1** to work at the adjacent local maximum power point and at lower voltage with respect to the maximum power point currently considered.

Moreover, in the specific case in which one or more photovoltaic panels **100** belonging to a same string **1** are at least partially shaded or malfunctioning, the case in which the application of the method of the invention makes most sense, the local points of maximum power delivered, spaced apart by such a voltage value ΔV₂, have substantially a power value increasing in the decreasing direction of the voltage Vᵢ defined at the ends of the string **1,** as represented in fig. 2.

Indeed, although the voltage Vᵢ set for the string **1** is reduced by the value ΔV₂, bypassing the photovoltaic panel **100** at lowest efficiency, the impediment to the flow of an electric current of higher value along the same string **1** is eliminated or at least reduced. Consequently, if the reduction of the voltage Vᵢ - ΔV₂ is lower, in the relative sense, than the increase in the current value I_{Vi-ΔV2} with respect to I_{Vi}, the power P_{Vi-ΔV2} delivered at such a voltage Vᵢ - ΔV₂ will also be greater with respect to the power P_{Vi} delivered at the current local maximum power point.

Concerning this, the aforementioned sequence of operations **A,** to evaluate whether the work conditions of a string **1** of a plurality of photovoltaic panels **100** correspond to the situation just described, foresees to observe the value of the power P_{Vi - ΔV2} delivered at the voltage value Vᵢ reduced by the quantity ΔV₂ and, in the case in which such a power value P_{Vi - ΔV2} is greater than the value of the power P_{Vi} delivered at the set voltage value Vᵢ, i.e. in the case in which at least one of the panels present in the string **1** is shaded or malfunctioning, the method foresees to modify the work point of the same string **1,** reducing the current set voltage value Vᵢ by the aforementioned quantity ΔV₂.

In the opposite case, according to which all of the photovoltaic panels **100** of a string **1** operate perfectly within the limits of normality, there would be no increase in the power delivered proceeding to the reduction, in a discrete manner, by said quantity ΔV₂, of the voltage Vᵢ, as represented in the characteristic of fig. 2 for the voltage values lower than the voltage value corresponding to the point of maximum power delivered indicated with **P3.** In this case, indeed, the method of the invention foresees to keep the voltage value Vᵢ set for the string **1** unchanged and to interrupt the repetition of the aforementioned sequence of operations **A.**

As stated earlier, indeed, the method of the invention foresees to carry out the sequence of operations **A** a predetermined maximum number of times **M.** This means that the method of the invention is configured to seek and observe a maximum number **M** of local points of maximum power delivered on a string **1** of photovoltaic panels **100.** This clearly happens if the local maximum power point observed previously has a delivered power value P_{Vi - ΔV2} that is greater with respect to the value of the power P_{Vi} delivered at the set voltage value Vᵢ. In the opposite case, as stated above, the repetition of the sequence of operations **A** is interrupted.

Furthermore, the method of the invention, according to the preferred embodiment, in the case in which P_{Vi - ΔV2} is greater than P_{Vi}, foresees to interrupt such repetition in advance when the current value I_{Vi - ΔV2} observed at the voltage value Vᵢ - ΔV₂ is greater than a predetermined first percentage quantity Δ₁% with respect to the current value I_{Vi} measured at said set voltage Vᵢ.

The logic at the basis of such further control consists of the fact that if the voltage value Vᵢ decreased by the quantity ΔV₂ corresponds to a current value I_{Vi - ΔV2} greater than a certain limit with respect to the present current I_{Vi}, consequently also determining an adequate increase in the power delivered P_{Vi - ΔV2} with respect to the power value P_{Vi}, it is presumed that the absolute maximum power point has been reached in the current work conditions and therefore it is considered no longer necessary to continue the search.

In particular, according to the preferred embodiment of the method of the invention, such a predetermined first percentage quantity Δ₁% is calculated as a second predetermined percentage quantity Δ₂% with respect to the percentage value that represents the reduction of voltage ΔV₂ with regard to the absolute voltage value of Vᵢ currently set for the string **1.** In even greater detail, the preferred embodiment foresees that such a second predetermined percentage quantity Δ₂% is selected equal to 50%.

In order to clarify such a concept let us consider, for example, the case in which there is a string **1** comprising ten photovoltaic panels **100** connected together in series and each of which has an open circuit nominal voltage equal to 40 V. Moreover, it is hypothesised to start from a voltage value Vᵢ set for the string **1** slightly lower than 400 V, so as to make the same string **1** work at the local point of maximum power delivered with higher voltage value, indicated with **P1** in fig. 2.

The method of the invention thus foresees to observe, at the first time interval ΔT₂, the value of the power P_{Vi-ΔV2} delivered at the voltage Vᵢ reduced by the quantity ΔV₂, i.e., reasoning in absolute terms, such an observation is made at a voltage value equal to 400 V - 40 V = 360 V. In this case, therefore, the percentage reduction in voltage obtained with respect to Vᵢ is equal to 10%. According to the preferred embodiment of the method of the invention, the value of the first percentage quantity Δ₁% is calculated as 50%, corresponding to the aforementioned second percentage quantity Δ₂%, with respect to such 10%. Therefore, according to the preferred embodiment of the invention, such a first percentage quantity Δ₁% is equivalent to 5% increase in current. Therefore, in the case in which the current value I_{Vi - ΔV2} observed at the aforementioned voltage of 360 V (V_{i -} ΔV₂) was greater than 5% with respect to the current value I_{Vi} measured at the voltage of 400 V (Vᵢ), the method of the invention would presume to have identified the absolute point of maximum power delivered in the current work conditions and, consequently, would be configured to interrupt the repetition of the sequence of operations **A.** In the opposite case, the same method proceeds to a further reduction of the voltage from 360 V to 320 V and to a further observation of the delivered power values and of current at such a reduced voltage value.

However, this does not rule out that according to different embodiments of the method of the invention such control on the current could not be carried out. In this case, the method would carry out and would repeat, for every time interval ΔT₂, the aforementioned sequence of operations **A** for the predetermined maximum number of times **M,** until at the voltage value Vᵢ reduced by the quantity ΔV₂ a power delivered P_{Vi - ΔV2} greater than the power P_{Vi} delivered at the aforementioned voltage value Vᵢ currently set for the string **1** is observed.

As stated earlier, the device **200** for managing one or more strings **1** of photovoltaic panels **100** connected together in series is also part of the invention. Such a device **200,** in particular, as can be seen in fig. 4, is adapted for being connected downstream of such a string **1** and is configured to carry out the method of the invention for determining the absolute point of maximum power delivered by the aforementioned string **1.**

In even greater detail, the device **200** of the invention comprises electrical connection means **201** for the connection to the string **1** of photovoltaic panels **100,** processing means **202** operatively connected to the aforementioned electrical connection means **201** and to storage means **203.** Moreover, the management device **200** comprises a sequence of computer instructions stored in such storage means **203.** The aforementioned sequence of computer instructions, when carried out by the processing means **202,** is configured to carry out the aforementioned steps and operations of the method of the invention.

Based on what has been stated therefore the method and the device of the invention achieve all of the predetermined purposes.

In particular, the purpose of defining a method for determining the absolute point of maximum power delivered by a string of photovoltaic panels connected in series and of making a device capable of implementing such a method is achieved.

Therefore, the purpose of defining a method and of making a relative device capable of optimizing the delivery of power of a string of photovoltaic panels connected in series in every possible situation and therefore of always keeping the efficiency thereof at the maximum possible level is also achieved.

The purpose of reducing the number of management devices that it is necessary to install in a photovoltaic system, in relation to the number of photovoltaic panels belonging to such a system, is also achieved.

## Claims

1. Method for determining the absolute point of maximum power delivered by a string (1) of photovoltaic panels (100) connected together in series, said method foreseeing to cyclically perform, for every time interval ΔT₁ of predetermined value, the following operations:
- starting from the voltage value Vᵢ set for said string (1) of photovoltaic panels (100), increasing and reducing said voltage value Vᵢ by a predetermined voltage quantity ΔV₁;
- observing the variations of the power P_{Vi + ΔV1} and P_{Vi - ΔV1} delivered by said string (1) at said voltage values Vᵢ + ΔV₁ and Vᵢ - ΔV₁, respectively, with respect to the value of the power P_{Vi} delivered at said set voltage value Vᵢ;
- in the case in which one of said power values P_{Vi + ΔV1} or P_{Vi - ΔV1} is greater than said power value P_{Vi}, setting as voltage value Vᵢ on said string (1) of photovoltaic panels (100) said voltage value Vᵢ respectively increased or decreased by said voltage quantity ΔV₁;
said method being **characterised in that** it foresees, for every time interval ΔT₂, > ΔT₁, that the following sequence of operations (A) be carried out, repeating it a maximum number of times M, said sequence of operations (A) foreseeing to:
- decreasing said voltage value Vᵢ set for said string (1) by a voltage quantity equal to ΔV₂, wherein ΔV₂ is selected substantially equal to the nominal open circuit voltage value of each of said photovoltaic panels (100) belonging to said string (1);
- observing the value of said power P_{Vi - ΔV2} delivered at said voltage value V_{i -} ΔV₂;
- in the case in which said power value P_{Vi - ΔV2} is greater than the value of the power P_{Vi} delivered at the set voltage value Vᵢ, setting as voltage value Vᵢ on said string (1) of photovoltaic panels (100) said voltage value Vᵢ decreased by said quantity ΔV₂, or in the opposite case interrupting the repetition of said sequence of operations (A).

2. Method according to claim 1, **characterised in that** said repetition of said sequence of operations (A) for every time interval ΔT₂ is interrupted in the case in which the current value I_{Vi - ΔV2} observed and corresponding to said voltage value Vᵢ - ΔV₂ is greater by a predetermined first percentage quantity Δ₁% with respect to the current value I_{Vi} measured at said set voltage Vᵢ.

3. Method according to claim 2, **characterised in that** said predetermined first percentage quantity Δ₁% is calculated as a second predetermined percentage quantity Δ₂% with respect to the percentage value that represents the reduction by said voltage quantity ΔV₂ with respect to the absolute value of said set voltage Vᵢ.

4. Method according to claim 3, **characterised in that** said second predetermined percentage quantity Δ₂% is selected to be equal to 50%.

5. Method according to any one of the previous claims, **characterised in that** said maximum number of times M of repetitions of said sequence of operations (A) is selected to be equal to 30% of the number of said photovoltaic panels (100) belonging to said string (1).

6. Method according to any one of the previous claims, **characterised in that** said time interval ΔT₂ is selected to be substantially equal to 1 minute.

7. Device (200) for managing one or more strings (1) of photovoltaic panels (100) connected together in series, said device (200) being adapted to be connected downstream of said one or more strings (1), **characterised in that** it is configured to carry out the method for determining the absolute point of maximum power delivered by said one or more strings (1) according to any one of the previous claims.

8. Device (200) according to claim 7, **characterised in that** it comprises:
- electrical connection means (201) for the connection to said string (1) of photovoltaic panels (100);
- processing means (202) operatively connected to said electrical connection means (201);
- storage means (203) operatively connected to said processing means (202) and in which a sequence of computer instructions is stored that, when executed by said processing means (202), is configured to carry out the method according to any one of claims 1 to 6.

## Patentansprüche

1. Verfahren zur Bestimmung des absoluten Punkts der durch einen String (1) aus in Reihe geschalteten Photovoltaikmodulen (100) gelieferten, maximalen Leistung, wobei das besagte Verfahren vorsieht, zyklisch für jedes Zeitintervall ΔT₁ von vorbestimmtem Wert folgende Vorgänge auszuführen:
- beginnend mit dem für den besagten String (1) aus Photovoltaikmodulen (100) eingestellten Spannungswert Vᵢ, die Erhöhung und Senkung des besagten Spannungswerts Vᵢ um eine vorbestimmte Spannungsmenge ΔV₁;
- Beobachtung der Variationen der durch den besagten String (1) jeweils bei den besagten Spannungswerten Vᵢ + ΔV₁ und V₁ - ΔV₁ gelieferten Leistung P_{Vi + ΔV1} und P_{Vi - ΔV1} bezüglich des Werts der bei dem besagten Einstellspannungswert Vᵢ gelieferten Leistung P_{Vi};
- ist einer der besagten Leistungswerte P_{Vi + ΔV1} oder P_{Vi - ΔV1} größer als der besagte Leistungswert P_{Vi}, Einstellung als Spannungswert Vᵢ an dem besagten String (1) aus Photovoltaikmodulen (100) des besagten Spannungswerts Vᵢ, jeweils durch die besagte Spannungsmenge ΔV₁ erhöht oder reduziert;
wobei das besagte Verfahren **dadurch gekennzeichnet ist, dass** es vorsieht, dass für jedes Zeitintervall ΔT₂, > ΔT₁ die folgende Sequenz aus Vorgängen (A) mit einer maximalen Anzahl Wiederholungen M ausgeführt wird, wobei die besagte Sequenz aus Vorgängen (A) Folgendes vorsieht:
- Senkung des besagten, für den besagten String (1) eingestellten Spannungswerts Vᵢ um eine Spannungsmenge gleich ΔV₂, wobei ΔV₂ im Wesentlichen gleich dem Wert der Nennleerlaufspannung jedes der besagten, zu dem besagten String gehörenden Photovoltaikmodule (100) gewählt wird (1);
- Beobachtung des Werts der besagten, bei dem besagten Spannungswert Vᵢ - ΔV₂ abgegebenen Leistung P_{Vi - ΔV2};
- ist der besagte Leistungswert P_{Vi - ΔV2} größer als der bei dem Einstellspannungswert Vᵢ gelieferte Leistungswert P_{Vi}, Einstellung als Spannungswert Vᵢ an dem besagten String (1) aus Photovoltaikmodulen (100) des besagten Spannungswerts Vᵢ, reduziert durch die besagte Menge ΔV₂, oder im gegenteiligen Fall Unterbrechung der besagten Sequenz aus Vorgängen (A).

2. Verfahren nach Patentanspruch 1, **dadurch gekennzeichnet, dass** die besagte Wiederholung der besagten Sequenz aus Vorgängen (A) für jedes Zeitintervall ΔT₂ unterbrochen wird, wenn der beobachtete und dem besagten Spannungswert Vᵢ - ΔV₂ entsprechende, aktuelle Wert I_{Vi - ΔV2} den aktuellen, bei der besagten Einstellspannung Vᵢ gemessenen Wert I_{Vi} um eine erste vorbestimmte, prozentuale Menge Δ₁% übersteigt.

3. Verfahren nach Patentanspruch 2, **dadurch gekennzeichnet, dass** die besagte erste, vorbestimmte prozentuale Menge Δ₁% bezüglich des Prozentwerts, der die Reduzierung um die besagte Spannungsmenge ΔV₂ bezüglich des absoluten Werts der besagten Einstellspannung Vᵢ darstellt, als eine zweite vorbestimmte prozentuale Menge Δ₂% berechnet wird.

4. Verfahren nach Patentanspruch 3, **dadurch gekennzeichnet, dass** die besagte zweite, vorbestimmte prozentuale Menge Δ₂% gleich 50% gewählt wird.

5. Verfahren nach einem jeden der vorstehenden Patentansprüche, **dadurch gekennzeichnet, dass** die besagte maximale Anzahl Wiederholungen M der besagten Sequenz aus Vorgängen (A) gleich 30% der Anzahl der besagten, zu dem besagten String (1) gehörenden Photovoltaikmodule (100) gewählt wird.

6. Verfahren nach einem jeden der vorstehenden Patentansprüche, **dadurch gekennzeichnet, dass** das besagte Zeitintervall ΔT₂ im Wesentlichen gleich 1 Minute gewählt wird.

7. Vorrichtung (200) zur Steuerung eines oder mehrerer Strings (1) aus in Reihe geschalteter Photovoltaikmodule (100), wobei die besagte Vorrichtung (200) dazu geeignet ist, stromabwärts des besagten einen bzw. der besagten mehreren Strings (1) angeschlossen zu werden, **dadurch gekennzeichnet, dass** sie darauf konfiguriert ist, das Verfahren zur Bestimmung des absoluten Punkts der durch den besagten einen oder die besagten mehreren String(s) (1) gelieferten, maximalen Leistung nach einem jeden der vorstehenden Patentansprüche auszuführen.

8. Vorrichtung (200) nach Patentanspruch 7, **dadurch gekennzeichnet, dass** sie Folgendes umfasst:
- elektrische Verbindungsmittel (201) zum Anschluss an den besagten String (1) aus Photovoltaikmodulen (100);
- operativ mit den besagten elektrischen Verbindungsmitteln (201) verbundene Verarbeitungsmittel (202);
- Speichermittel (202), die operativ mit den besagten Verarbeitungsmitteln (203) verbunden sind und in denen eine Sequenz aus Computeranweisungen gespeichert ist, die bei Ausführung durch die besagten Verarbeitungsmittel (202) darauf konfiguriert ist, das Verfahren nach einem jeden der Patentansprüche von 1 bis 6 auszuführen.

## Revendications

1. Méthode pour la détermination du point absolu de puissance maximale distribuée par une chaîne (1) de panneaux photovoltaïques (100) reliés entre eux en série, ladite méthode prévoyant d'exécuter cycliquement, pour chaque intervalle de temps ΔT₁ de valeur préétablie, les opérations suivantes:
- en partant de la valeur de tension Vᵢ fixée à ladite chaîne (1) de panneaux photovoltaïques (100), augmenter et réduire ladite valeur de tension Vᵢ d'une quantité de tension prédéfinie ΔV₁;
- observer les variations de la puissance P_{Vi + ΔV1} et P_{Vi - ΔV1} distribuée par ladite chaîne (1) respectivement à hauteur desdites valeurs de tension Vᵢ + ΔV₁ et Vᵢ - ΔV₁ par rapport à la valeur de la puissance P_{Vi} distribuée à hauteur de ladite valeur de tension fixée Vᵢ;
- dans le cas où une desdites valeurs de puissance P_{Vi +} ΔV₁ ou P_{Vi - ΔV1} résulterait supérieure à ladite valeur de puissance P_{Vi}, établir comme valeur de tension Vᵢ sur ladite chaîne (1) de panneaux photovoltaïques (100) ladite valeur de tension Vᵢ respectivement augmentée ou diminuée de ladite quantité de tension ΔV₁;
ladite méthode étant **caractérisée en ce qu'**elle prévoit, pour chaque intervalle de temps ΔT₂, > ΔT₁, d'exécuter la séquence d'opérations suivante (A) en la répétant pour un numéro maximal de fois M, ladite séquence d'opérations (A) prévoyant de:
- diminuer ladite valeur de tension Vᵢ fixée à ladite chaîne (1) d'une quantité de tension égale à ΔV₂, où ΔV₂ est sélectionnée essentiellement égale à la valeur de tension nominale à circuit ouvert de chacun desdits panneaux photovoltaïques (100) appartenant à ladite chaîne (1);
- observer la valeur de ladite puissance P_{Vi - ΔV2} distribuée à hauteur de ladite valeur de tension Vᵢ - ΔV₂;
- dans le cas où ladite valeur de puissance P_{Vi - ΔV2} résulterait supérieure à la valeur de la puissance P_{Vi} distribuée à hauteur de la valeur de tension fixée Vᵢ, établir comme valeur de tension Vᵢ sur ladite chaîne (1) de panneaux photovoltaïques (100) ladite valeur de tension Vᵢ diminuée de ladite quantité ΔV₂, ou, dans le cas contraire, interrompre la répétition de ladite séquence d'opérations (A).

2. Méthode selon la revendication 1, **caractérisée en ce que** ladite répétition de ladite séquence d'opérations (A) pour chaque intervalle de temps ΔT₂ est interrompue dans le cas où la valeur de courant I_{Vi - ΔV2} observée et correspondant à ladite valeur de tension Vᵢ - ΔV₂ résulterait supérieure d'une première quantité de pourcentage prédéfinie Δ₁% par rapport à la valeur actuelle I_{Vi} mesurée à hauteur de ladite tension fixée Vᵢ.

3. Méthode selon la revendication 2, **caractérisée en ce que** ladite première quantité de pourcentage prédéfinie Δ₁% est calculée comme une deuxième quantité de pourcentage prédéfinie Δ₂% par rapport à la valeur de pourcentage qui représente la réduction de ladite quantité de tension ΔV₂ par rapport à la valeur absolue de ladite tension fixée Vᵢ.

4. Méthode selon la revendication 3, **caractérisée en ce que** ladite deuxième quantité de pourcentage prédéfinie Δ₂% est choisie égale à 50%.

5. Méthode selon l'une quelconque des revendications précédentes, **caractérisée en ce que** ledit numéro maximum de fois M de répétitions de ladite séquence d'opérations (A) est choisi égal à 30% du numéro desdits panneaux photovoltaïques (100) appartenant à ladite chaîne (1).

6. Méthode selon l'une quelconque des revendications précédentes, **caractérisée en ce que** ledit intervalle de temps ΔT₂ est choisi essentiellement égal à 1 minute.

7. Dispositif (200) de gestion d'une ou plusieurs chaînes (1) de panneaux photovoltaïques (100) reliés entre eux en série, ledit dispositif (200) étant apte à être relié en aval de ladite une ou plusieurs chaînes (1), **caractérisé en ce qu'**il est configuré pour réaliser la méthode de détermination du point absolu de puissance maximale distribuée par ladite une ou plusieurs chaînes (1) selon l'une quelconque des revendications précédentes.

8. Dispositif (200) selon la revendication 7, **caractérisé en ce qu'**il comprend:
- des moyens de connexion électrique (201) pour la connexion à ladite chaîne (1) de panneaux photovoltaïques (100);
- des moyens d'élaboration (202) reliés de manière opérationnelle auxdits moyens de connexion électrique (201);
- des moyens de mémorisation (203) reliés de manière opérationnelle auxdits moyens d'élaboration (202) et dans lesquels est mémorisée une séquence d'instructions informatiques que, quand exécutée par lesdits moyens d'élaboration (202), est configurée pour réaliser la méthode selon l'une quelconque des revendications de 1 à 6.
